# EUROPÄISCHE PATENTSCHRIFT

(11) **EP 0 680 423 B1**
(45) Veröffentlichungstag und Bekanntmachung des Hinweises auf die Patenterteilung: **11.09.1996**
(21) Anmeldenummer: 94905663.4
(22) Anmeldetag: 20.01.1994
(51) Int. Cl.: B60R 25/04, B60R 25/10

(54) **SICHERUNGSSYSTEM**
SAFETY SYSTEM
SYSTEME DE SECURITE

(30) Priorität: 20.01.1993 DE 4301436
(43) Veröffentlichungstag der Anmeldung: 08.11.1995
(73) Patentinhaber: KAISER, Hans-Christian, D-71120 Grafenau (DE)
(72) Erfinder: KAISER, Hans-Christian, D-71120 Grafenau (DE); WÖLM, Holger, D-76709 Kronau (DE); SCHMITT, Udo, D-70771 Leinfelden-Echterdingen (DE)
(74) Vertreter: Feldkamp, Rainer, Dipl.-Ing.
(86) Internationale Anmeldenummer: EP9400142
(87) Internationale Veröffentlichungsnummer: WO9416923

(56) Entgegenhaltungen:
- EP-A- 0 225 492
- EP-A- 0 268 902
- EP-A- 0 292 759
- EP-A- 0 308 988
- DE-A- 3 507 593
- DE-A- 3 545 575
- US-A- 4 380 225
- US-A- 4 777 468

## Beschreibung

Die Erfindung bezieht sich auf ein Sicherungssystem der im Oberbegriff des Patentanspruchs 1 genannten Art, wie es beispielsweise aus der EP-A-0 292 759 bekannt ist.

Sicherungssysteme zur Sicherung ortsbeweglicher Gegenstände sind in vielfältiger Form bekannt. Typische Beispiele hierfür sind Alarmanlagen von Kraftfahrzeugen, doch sind die gleichen Grundgedanken beispielsweise auf Koffer, Computer und dergleichen anwendbar, die gegen nichtautorisierte Benutzung oder Entfernung zu sichern sind.

Es ist bekannt, daß derartige Sicherungssysteme von erfahrenen Personen innerhalb relativ kurzer Fristen außer Betrieb gesetzt oder unwirksam gemacht werden können, beispielsweise durch Überbrücken und/oder Ausbau von Zündschlössern und/oder Alarmkontakten.

Aus der DE-A1-35 45 575 ist eine Alarmanlage für ein Fahrzeug bekannt, bei der das Einschalten von elektrischen Stromverbrauchern durch Überwachung der Spannung des Bordnetzes des Fahrzeuges überwacht wird. Bei Einschalten eines Verbrauchers, beispielsweise der Innenbeleuchtung des Fahrzeuges, ergibt sich eine Änderung der Spannung des Bordnetzes, die von einer Überwachungseinrichtung in dem Sicherungssystem festgestellt und zur Steuerung von Alarmfunktionen verwendet wird. Um eine Eingruppierung einzelner Verbraucher in Verbraucher, deren Einschalten unmittelbar zur Auslösung von Alarmfunktionen führt, und Verbraucher, deren Einschalten erst mit einer zeitlichen Verzögerung zum Einschalten von Alarmfunktionen führt, zu ermöglichen, sind den einzelnen überwachten Verbrauchern Zustandsmelder zugeordnet, die zusätzlich zu dem durch das Einschalten des Verbrauchers hervorgerufenen Spannungssprung (Spannungsabfall) eine Impulsfolge auf das Bordnetz aufprägen, die in der Überwachungseinrichtung des Sicherungssystems ausgewertet wird.

Auch hierbei ist es durch einfaches Ausbauen beispielsweise der Überwachungseinrichtung möglich, die Alarmanlage unwirksam zu machen.

Aus der EP-A1-0 308 988 ist eine Diebstahlsicherungsvorrichtung bekannt, bei der in einer Zündspule eines Kraftfahrzeuges eine Steuerschaltung angeordnet ist, die eine Verbindung der Wicklung der Zündspule mit außenliegenden Anschlüssen nur dann herstellt, wenn der Steuerschaltung ein vorzugsweise codiertes Steuersignal zugeführt wird, das von einem diesem Fahrzeug zugeordneten Sender geliefert wird. Da die Steuerschaltung mit der Zündspule vergossen und von dieser nicht ohne Zerstörung trennbar ist, ist ein Betrieb des Fahrzeuges nach einem Diebstahl nur nach Austausch der Zündspule durch eine handelsübliche Zündspule oder eine Zündspule mit einer Steuerschaltung, für die ein zugehöriger Sender zur Verfügung steht, möglich. Dies bedeutet jedoch, daß lediglich durch Austausch eines einzigen identifizierbaren Bauteils des Fahrzeuges dessen Betriebsfähigkeit nach einem Diebstahl wieder hergestellt werden kann.

Der Erfindung liegt die Aufgabe zugrunde, ein Sicherungssystem der eingangs genannten Art zu schaffen, das eine wesentlich vergrößerte Sicherheit gegen eine nicht-autorisierte Benutzung oder Entfernung eines Gegenstandes ergibt, wobei die bestimmungsgemäße Funktion des zu sichernden Gegenstandes nicht mehr möglich ist, wenn eines oder mehrere der Sicherungselemente des Sicherungssystems zerstört oder unwirksam gemacht werden.

Diese Aufgabe wird durch die im kennzeichnenden Teil des patentanspruchs 1 angegebenen Merkmale gelöst.

Vorteilhafte Ausgestaltungen und Weiterbildungen der Erfindung ergeben sich aus den Unteransprüchen.

Bei der erfindungsgemäßen Ausgestaltung des Sicherungssystems ist es unmöglich, dieses dadurch außer Betrieb zu setzen, daß eines der Sicherungselemente, beispielsweise in Form der Zustandsmelder und/oder Zustandswandler überbrückt wird, da in diesem Fall nicht mehr alle Codesignale ordnungsgemäß über den gemeinsamen Nachrichtenübertragungskanal übertragen werden. Die zumindest eine Überwachungseinheit und/oder zumindest einige der Zustandsmelder und Zustandswandler enthalten Steuereinheiten, in denen Informationen über alle oder zumindest eine vorgegebene Anzahl der in dem System verwendeten Codesignale gespeichert sind und die die über den gemeinsamen Nachrichtenübertragungskanal übertragenen Codesignale überprüfen, wobei die von der jeweiligen Steuereinheit gemeldete oder gesteuerte Funktion gesperrt wird, wenn nicht alle oder die dieser Steuereinheit zugeordnetete Anzahl der Codessignale in dem System vorhanden sind.

Zur Erläuterung sei als Beispiel auf Kraftfahrzeuge verwiesen, bei denen die zumindetens eine Überwachungseinheit beispielsweise die zentrale Steuereinheit für die Motorfunktionen derart enthält, daß diese Überwachungseinheit nicht ohne Zerstörung sämtlicher Funktionen von der Steuereinheit trennbar ist.

Dieser zumindest einen Überwachungseinheit sowie den einzelnen Zustandswandlern und -meldern sind jeweilige Codesignale zugeordnet, und der Austausch eines dieser Elemente führt dazu, daß ein 'fremdes' Codesignal oder gar kein Codesignal in das System eingeführt wird, was unmittelbar zum Ausfall der Überwachungseinheiten und/oder derjenigen Zustandsmelder und -wandler führt, die ebenfalls das Sicherungssystem auf korrektes Vorhandensein der Codesignale überprüfende Steuereinheiten enthalten.

Da die Codierer und Decodierer der Zustandsmelder und Zustandswandler unter Verwendung integrierter Schaltungen sehr einfach aufgebaut werden können, können derartige Zustandsmelder beispielsweise selbst Türkontakte, Öldruckgeber, Temperaturgeber und dergleichen sein, so daß eine Vielzahl derartiger Zustandsmelder in dem Sicherungssystem ohne großen Kostenaufwand verteilt werden kann. Gleiches gilt für die Zustandswandler, die beispielsweise Beleuchtungseinrichtungen, Anlasser und dergleichen steuern können.

Dadurch, daß zumindest einem weiteren Zustandsmelder oder Zustandswandler ebenfalls eine Steuereinheit zugeordnet wird, in der Informationen über eine weitere vorgegebene Anzahl von Codesignalen gespeichert sind, wird die unerlaubte Benutzung des gesicherten Gegenstandes durch Austausch einer Überwachungseinheit verhindert. Die mit Steuereinheiten versehenen Zustandsmelder und -wandler können in relativ zufälliger und von einem Gegenstand zum anderen leicht änderbarer Weise über den Gegenstand verteilt sein, was eine Beseitigung der einzelnen Baugruppen des Sicherungssystems extrem erschwert, wenn nicht unmöglich macht.

Da jedem dieser Zustandsmelder und -wandler eine Vielzahl von unterschiedlichen Codesignalen zugeordnet werden kann, die praktisch nicht zu ermitteln sind oder nur dann abgegeben werden, wenn alle übrigen Komponenten des Systems die korrekten Codesignale abgegeben haben, ist es in der Praxis nur mit unvertretbarem Aufwand möglich, das Sicherungssystem dadurch unwirksam zu machen, daß sowohl die Überwachungseinheiten als auch sämtliche Zustandsmelder und Zustandswandler durch nichtcodierte entsprechende Bauteile ersetzt werden. Die einzelnen Zustandsmelder und Zustandswandler können ebenfalls vorzugsweise so mit den von ihnen gesteuerten Aggregaten oder den Aggregaten, von denen sie Signale empfangen, verbunden werden, daß sie nur unter Zerstörung von diesen trennbar sind.

Der gemeinsame Nachrichtenübertragungskanal kann beispielsweise eine einfache Sammelschiene oder ein Glasfasernetzwerk oder dergleichen sein, und dieser Nachrichtenübertragungskanal kann kann von der üblichen Verkabelung, beispielsweise eines Fahrzeuges, unabhängig sein oder einen Teil hiervon bilden, wenn diese Verkabelung ohnehin zumindest teilweise aus einer Signalsammelschiene besteht, deren Verwendung sich ohnehin immer mehr zur Einsparung aufwendiger Verkabelungen in Kraftfahrzeugen durchsetzt.

Gemäß einer bevorzugten Ausgestaltung der Erfindung kann das Codesignal zumindest eines der Zustandsmelder oder -wandler durch äußere Einwirkung, beispielsweise ein Funksignal, änderbar sein. Hierbei können Funksignale ohnehin vorhandener Funknetze mit weiter Verbreitung, zB. Eurosignalnetze, in entsprechend codierter und gesicherter Codierung verwendet werden.

Für die in diesem Fall verwendeten Funksignalempfänger werden selbstverständlich die gleichen Sicherungsmaßnahmen getroffen, d.h. sie sind nicht ohne Zerstörung von den zugehörigen Zustandsmeldern oder -wandlern trennbar und sie geben bei ihrer Beeinträchtigung, beispielsweise bei einer Entfernung ihrer Antenne, ein Fehler-Codesignal ab.

Wenn die einzelnen Steuereinheiten jeweils unterschiedliche Gruppen von Codesignalen überprüfen, so ist es möglich, diese Codesignale in Abhängigkeit von bestimmten Wertigkeiten so zu einer jeweiligen Anzahl von Codesignalen zusammenzufassen, daß der Ausfall eines Codesignals einer dieser Anzahlen andere Folgen hat, als der Ausfall eines Codesignals einer anderen Anzahl dieser Codesignale. So kann beispielsweise die genannte äußere Einwirkung bei einem Fahrzeug einen sofortigen vollständigen oder weitgehenden Leistungsabfall des Antriebsmotors zur Folge haben, wenn das Codesignal des entsprechenden Empfängers in der der Motorsteuerung des Fahrzeugs zugeordneten Steuereinheit überprüft wird, während andere fehlerhafte oder fehlende Codesignale in einer anderen Anzahl von Codesignalen eingruppiert sind und nur das erneute Einschalten eines Bauteils des Fahrzeugs, beispielsweise der Beleuchtung oder des Anlassers sperren oder dieses Einschalten nur noch eine begrenzte Anzahl von Malen zulassen, so daß ein Notbetrieb bei Ausfall von nicht absolut funktionswichtigen Bauteilen möglich ist.

Ausführungsbeispiele der Erfindung werden im folgenden anhand der Zeichnungen noch näher erläutert.

In den Zeichnungen zeigen:
- Fig. 1: ein Blockschaltbild eines Beispiels für den Aufbau und die Zusammenschaltung der Bauteile des Sicherungssystems,
- Fig. 2: ein Beispiel für die Anwendung des Sicherungssystems auf ein Kraftfahrzeug.

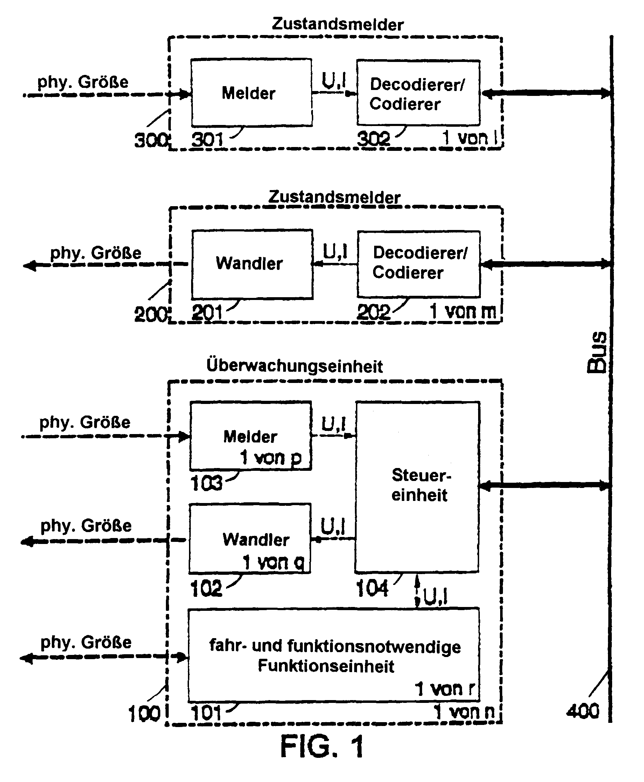

In Fig. 1 ist ein Blockschaltbild gezeigt, daß die Grundgedanken des Sicherungssystems verdeutlicht. Dieses Sicherungssystem weist eine integrierte Überwachungseinheit 100 auf, die eine für die Funktion des von dem Sicherungssystem geschützten Gegenstandes zwingend erforderliche Funktionseinheit 101 aufweist. Diese Funktionseinheit 101 wird von einer Steuereinheit 104 gesteuert, die mit einem gemeinsamen Nachrichtenübertragungskanal oder BUS 400, beispielsweise in Form einer Sammelschiene oder eines Glasfaserübertragungskanals verbunden ist. Mit diesem gemeinsamen Nachrichtenübertragungskanal 400 sind weiterhin Zustandswandler 200 und Zustandsmelder 300 verbunden. Die Verbindung der Überwachungseinheit und der Zustandswandler und Zustandsmelder mit dem gemeinsamen Nachrichtenübetragungskanal erfolgt über Decodierer und Codierer 202 bzw. 302 sowie in der Steuereinheit 104 angeordnete Decodierer und Codierer. Jeder Codierer liefert entweder kontinuierlich oder auf Ansteuerung Codesignale an den Nachrichtenübertragungskanal 400, wobei diese Codesignale die jeweilige Überwachungseinheit oder den Zustandswandler oder Zustandsmelder identifizieren.

Die Überwachungseinheit 100 und zumindestens einer, vorzugsweise jedoch mehrere, der Zustandswandler 200 und Zustandsmelder 300, enthalten Steuereinheiten, die Informationen über sämtliche oder eine jeweils vorgegebene Anzahl der in dem Sicherungssystem verwendeten Codesignale der einzelnen Baueinheiten speichern und diese Codesignale mit den auf dem Nachrichtenübertragungskanal auftretenden Codesignalen vergleichen, wobei die Funktion dieser Überwachungseinheit, der betreffenden Zustandswandler und Zustandsmelder nur dann möglich ist, wenn die vorgegebenen Codesignale des Sicherungssystems korrekt empfangen werden.

Dies bedeutet, daß wenn beispielsweise einer der Zustandswandler 200 oder Zustandsmelder 300 aus dem System entfernt wird, sämtliche Baueinheiten, die eine Überprüfung der Codesignale dieses Zustandswandlers oder Zustandmelders durchführen, ihre Funktion nicht mehr erfüllen. Die Zustandswandler 200 können außer den Codierern und Decodierern 202 Wandler 201 aufweisen, die in Abhängigkeit von über den gemeinsamen Nachrichtenübertragungskanal ausgesandten und von dem zugehörigen Decodierer decodierten Steuersignalen angesteuert werden und die Steuerung einer physikalischen Größe, wie Strom, Spannung, mechanische Kraft oder Zustand ändern.

Die Zustandsmelder 300 können in gleicher Weise einen Decodierer-Codierer 302 aufweisen, der Ausgangssignale von einem Melder 301 für physikalische Größen, wie Strom, Spannung, Temperatur, Licht, Geräusch, mechanische Änderungen an den Codierer weiterleitet, worauf dieser ein entsprechendes Signal über den gemeinsamen Nachrichtenübertragungskanal abgibt. Entsprechende Melder 103 und Wandler 102 können ebenfalls einen Teil der integrierten Überwachungseinheit bilden.

Diese entsprechenden Decodierer-Codierer können weiterhin einen Teil der Steuereinheiten bilden, wenn eine solche dem Zustandwandler oder Zustandsmelder zugeordnet ist.

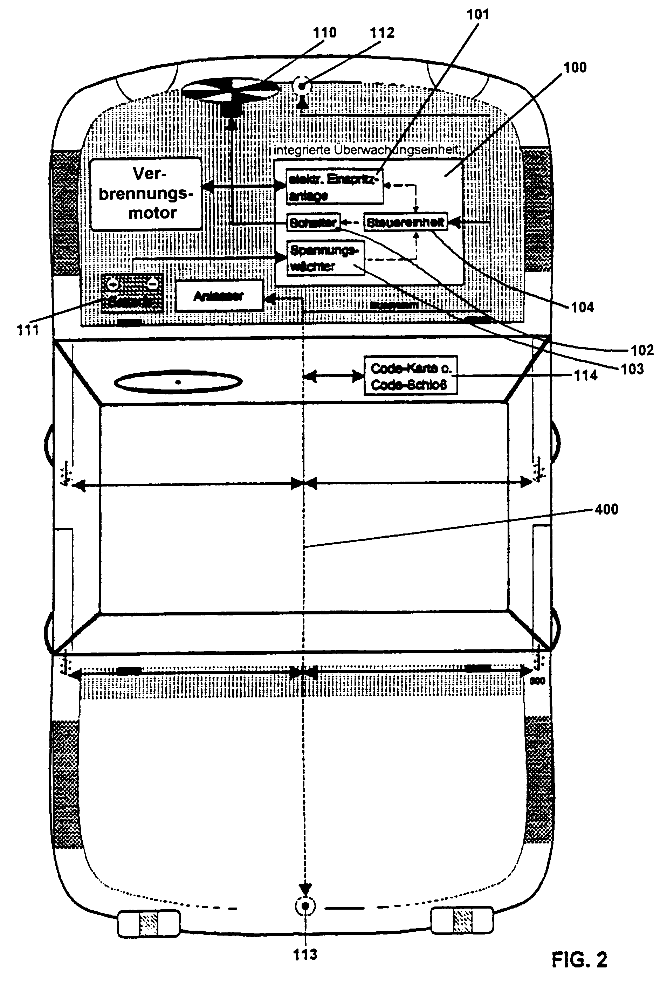

In Fig. 2 ist ein Beispiel für die Anwendung der anhand der Fig. 1 erläuterten Grundgedanken auf ein Kraftfahrzeug gezeigt.

Dieses Kraftfahrzeug weist eine fahr- und funktionsnotwendige Funktionseinheit in Form einer elektrischen Einspritz- und Zündeinheit 101 auf, die ein Antriebsaggregat, beispielsweise einen Verbrennungsmotor steuert. Diese Einspritz- und Zündeinheit 101 bildet einen Teil der Überwachungseinheit 100, deren Steuereinheit mit dem gemeinsamen Nachrichtenübertragungskanal verbunden ist. Die Überwachungseinheit 100 weist weiterhin Wandler 102, beispielsweise in Form eines Schalters für ein Lüfterrad 110 und einen Zustandsmelder, beispielsweise in Form eines Spannungsreglers 103 für eine Batterie 111 auf. Der gemeinsame Nachrichtenübertragungskanal ist weiterhin mit Motoroder Kofferraumhaubenschaltern 112 bzw. 113 verbunden, die Zustandsmelder im Sinne des Blockschaltbildes nach Fig. 1 darstellen.

Weitere, mit dem gemeinsamen Nachrichtenübertragungskanal 400 verbundene Zustandsmelder können Meßfühler für Temperatur, Öldruck und dergleichen des Antriebsaggregates sein.

Ein weiterer Zustandsmelder kann durch das Zündschloß oder beispielsweise ein Codeschloß 114 gebildet sein. Gemäß einer bevorzugten Ausführungsform kann einer der Zustandsmelder oder Zustandswandler durch ein äußeres Signal beeinflußbar sein, beispielsweise durch ein Funksignal, durch das zumindestens der diesem Zustandswandler oder Zustandsmelder identifizierende Code änderbar ist, so daß alle die Codesignale des Sicherungssystems überwachenden Baueinheiten ihre Funktion sperren. Auf diese Weise ist es bei einem Diebstahl des Fahrzeuges beispielsweise möglich, durch ein äußeres Funksignal das Codesignal eines der Baueinheiten zu ändern, mit der Folge, daß das gesamte Fahrzeug funktionsuntüchtig wird und praktisch nur von einer Stelle wieder in Gang gesetzt werden kann, die Informationen über sämtliche in dem speziellen Fahrzeug verwendeten Codesignale verfügt. Gleiches gilt auch für den Fall, daß irgendeine der Baueinheiten, beispielsweise ein Türkontakt überbrückt oder ausgetauscht wird. Da dieses Austauschteil oder das überbrückte Teil nicht mehr den korrekten Code liefert, ist das gesamte Fahrzeug funktionsunfähig. Mit einer Codierung versehene Bauteile können nur von berechtigten Personen beschafft und/oder eingebaut werden, so daß auf diese Weise ein nichtautorisierter Betrieb des Fahrzeuges unmöglich ist.

Die soweit beschriebenen Zustandswandler sind sämtlich Wandler, die ohnehin bei einem zu sichernden Gegenstand, beispielsweise einem Fahrzeug vorhanden sind. Das Sicherungssystem kann jedoch auch zusätzliche Wandler einschließen, wie zum Beispiel mechanische Getriebe- oder Motorblockierungen, die an schwer zugänglichen Stellen angeordnet sind und die gleichen Sicherheitsmerkmale wie die vorstehend beschriebenen Zustandswandler aufweisen.

Obwohl im Vorstehenden ein bevorzugtes Beispiel des Sicherungssystems anhand eines Fahrzeuges beschrieben wurde, ist die Anwendung des Sicherungssytems auf andere Gegenstände denkbar. So kann beispielsweise ein Computer mit einem Codeschloß versehen werden, das ein entsprechendes Codesignal nach Art eines der Zustandsmelder oder Zustandswandler nach Fig.1 liefert. Die integrierte Überwachungseinheit kann die Hauptplatine des Rechners umfassen, während die übrigen Funktionseinheiten des Rechners, wie beispielsweise Magnetlaufwerke, Schnittstellenschaltungen, Monitore und dergleichen Zustandsmelder und/oder Zustandswandler nach Fig. 1 bilden können. Sofern nicht alle in dem System vorgesehenen Codesignale korrekt erzeugt werden, ist eine Funktion des Gesamtsystems selbst dann nicht möglich, wenn einzelne der vorstehend genannten Baueinheiten ausgetauscht werden. Sämtliche Baueinheiten bilden ein Gesamtsystem mit vorgegebenen Codesignalen für jede Baueinheit, von denen jede unwirksam ist, wenn in dem Gesamtsystem nicht die anderen vorgegebenen Baueinheiten mit zugeordneten Codesignalen enthalten sind.

## Patentansprüche

1. Sicherungssystem zur Sicherung eines ortsbeweglichen Gegenstandes, insbesondere eines Fahrzeuges, gegen eine nicht-autorisierte Benutzung oder Entfernung, wobei der Gegenstand zumindest eine von einem Benutzer steuerbare und für die Funktion des Gegenstandes zwingend erforderliche Funktioneinheit (101) aufweist und das Sicherungssystem Zustandsmelder (103, 300) zur Messung physikalischer Größen und eine Überwachungseinheit (100) zur Überwachung der Ausgangssignale der Zustandsmelder (300) und zur Steuerung von Alarmfunktionen und/oder der zumindest einen Funktionseinheit (101) aufweist,
dadurch gekennzeichnet,
daß die Funktionseinheit (101) einen Teil der Überwachungseinheit (100) bildet und von dieser nicht zerstörungsfrei trennbar ist,
daß die Überwachungseinheit (100) eine zumindest die Funktionseinheit (101) steuernde Steuereinheit (104) aufweist, die über einen gemeinsamen Nachrichtenübertragungskanal (400) mit den Zustandsmeldern (300) zur Messung physikalischer Größen und/oder mit Zustandswandlern (200) zur Steuerung physikalischer Größen verbunden ist,
daß die Zustandsmelder (300) und die Zustandswandler (200) kontinuierlich oder auf Ansteuerung codierte, den Zustandsmelder (300) oder Zustandswandler identifizierende Codesignale über den gemeinsamen Nachrichtenübertragungskanal (400) aussenden,
daß in der Steuereinheit (104) der Überwachungseinheit (100) Informationen über die korrekte Form der Codesignale zumindest einer vorgegebenen Anzahl der Zustandsmelder (300) und Zustandswandler (200) des Sicherungssystems gespeichert sind und die Steuereinheit (104) die Funktion der zumindest einen Funktionseinheit (101) sperrt, wenn die Steuereinheit nicht zumindest die Codesignale der vorgegebenen Anzahl der Zustandsmelder (300) und Zustandswandler (200) in korrekter Form empfängt,
daß zumindest einer der Zustandsmelder (300) oder Zustandswandler (200) mit dem gemeinsamen Nachrichtenübertragungskanal (400) über eine weitere Steuereinheit (202, 302) verbunden ist, in der ebenfalls Informationen über die korrekte Form der Codesignale zumindest einer weiteren vorgegebenen Anzahl der anderen Zustandsmelder (300), Zustandswandler (200) sowie Steuereinheiten (104, 202, 302) gespeichert sind und die diese Codesignale kontinuierlich oder auf Ansteuerung überprüft und eine vorgesehene Zustandsmeldung oder Zustandswandlung nur dann ausführt, wenn die Codesignale der weiteren vorgegebenen Anzahl von Zustandsmeldern (300), Zustandswandlern (200) und Funktionseinheiten (101) korrekt über den gemeinsamen Nachrichtenübertragungskanal (400) empfangen werden.

2. Sicherungssystem nach Anspruch 1,
dadurch gekennzeichnet, daß die Anzahl der in einer vorgegebenen Steuereinheit überprüften Codesignale und der Zeitpunkt der Überprüfung von dem Betriebszustand des zu sichernden Gegenstandes abhängt.

3. Sicherungssystem nach Anspruch 1 oder 2,
dadurch gekennzeichnet, daß eine Steuereinheit, die nicht alle Codesignale der ihr zugeordneten vorgegebenen Anzahl von Codesignalen korrekt empfängt, ein Fehler-Codesignal auf den gemeinsamen Nachrichtenübertragungssignal überträgt, und daß das Fehler-Codesignal in den anderen Steuereinheiten und/oder Zustandsmeldern und/oder Zustandswandlern auswertbar ist.

4. Sicherungssystem nach einem der Ansprüche 1 bis 3,
dadurch gekennzeichnet, daß die Überwachungseinheit (100) nicht zerstörungsfrei von dieser trennbare Zustandsmelder (103) und Zustandswandler (102) enthält.

5. Sicherungssytem nach einem der vorhergehenden Ansprüche, bei dem der Gegenstand ein Fahrzeug (1) ist,
dadurch gekennzeichnet, daß die Zustandsmelder (300) und/oder deren Steuereinheiten einen nicht ohne Zerstörung trennbaren Teil eines Zündschlosses und/oder von Bewegungsmeldern und/oder von Türkontakten und/oder von Sensoren für physikalische Größen der Antriebseinheit bilden.

6. Sicherungssystem nach Anspruch 5,
dadurch gekennzeichnet, daß die Zustandswandler (200) einen Anlassermotor und/oder Betätigungsschalter für Beleuchtungseinrichtungen und/oder die Zünd- und/oder Einspritzeinrichtung steuern.

7. Sicherungssystem nach Anspruch 6,
dadurch gekennzeichnet, daß die Zustandswandler (200) von den durch sie gesteuerten Elementen nur unter Zerstörung trennbar sind.

8. Sicherungssystem nach einem der Ansprüche 5 bis 7,
dadurch gekennzeichnet, daß die zwingend erforderliche Funktionseinheit (101) der Überwachungseinheit (100) die zentrale Steuereinheit des Fahrzeuges ist.

9. Sicherungssystem nach einem der vorhergehenden Ansprüche,
dadurch gekennzeichnet, daß das Codesignal zumindest eines der Zustandsmelder (300) oder Zustandswandler (200) und/oder der Überwachungseinheit (100) durch äußere Einwirkung änderbar ist.

10. Sicherungssystem nach Anspruch 9,
dadurch gekennzeichnet, daß die äußere Einwirkung ein Funksignal ist, und daß mit dem genannten Zustandsmelder oder Zustandswandler ein hiervon nicht zerstörungsfrei trennbarer Funkempfänger verbunden ist, der bei einer Funktionsbeeinträchtigung die Aussendung eines Fehler-Codesignals auf den gemeinsamen Nachrichtenübertragungskanal hervorruft.

11. Sicherungssystem nach einem der vorhergehenden Ansprüche,
dadurch gekennzeichnet, daß der gemeinsame Nachrichtenübertragungskanal ein optischer Übertragungskanal ist.

## Claims

1. A security system for securing a travelling object, especially a vehicle, against unauthorised use or removal, the object comprising at least one functional unit (101) controllable by a user and absolutely necessary for functioning of the object and the security system comprising status indicators (103, 300) for measuring physical variables and a monitoring unit (100) for monitoring the output signals of the status indicators (300) and for controlling alarm functions and/or the at least one functional unit (101), characterised in that the functional unit (101) forms part of the monitoring unit (100) and cannot be nondestructively separated therefrom, in that the monitoring unit (100) comprises a control unit (104) controlling at least the functional unit (101), which control unit (104) is connected via a common information transmission channel (400) with the status indicators (300) for measuring physical variables and/or with status transducers (200) for controlling physical variables, in that the status indicators (300) and the status transducers (200) emit, via the common information transmission channel (400), encoded code signals identifying the status indicator (300) or status transducer, said emission being continuous or on actuation, in that information about the correct form of the code signals at least of a predetermined number of status indicators (300) and status transducers (200) of the security system are stored in the control unit (104) of the monitoring unit (100), the control unit (104) blocking functioning of the at least one functional unit (101) if the control unit does not receive at least the code signals of the predetermined number of status indicators (300) and status transducers (200) in the correct form, in that at least one of the status indicators (300) or status transducers (200) is connected with the common information transmission channel (400) via a further control unit (202, 302), in which information about the correct form of the code signals of at least a further predetermined number of the other status indicators (300), status transducers (200) and control units (104, 202, 302) is likewise stored and which checks these code signals continuously or on actuation and effects a predetermined status indication or status transduction only if the code signals of the further predetermined number of status indicators (300), status transducers (200) and functional units (101) are received correctly via the common information transmission channel (400).

2. A security system according to claim 1, characterised in that the number of code signals checked in a predetermined control unit and the time of checking depends on the operational status of the object to be secured.

3. A security system according to claim 1 or claim 2, characterised in that a control unit which does not correctly receive all the code signals of the predetermined number of code signals associated therewith transmits an error code signal to the common information transmission signal, and in that the error code signal may be evaluated in the other control units and/or status indicators and/or status transducers.

4. A security system according to any one of claims 1 to 3, characterised in that the monitoring unit (100) comprises status indicators (103) and status transducers (102) which cannot be nondestructively separated therefrom.

5. A security system according to any one of the preceding claims, wherein the object is a vehicle (1), characterised in that the status indicators (300) and/or their control units form a part, which cannot be nondestructively separated, of an ignition lock and/or of motion indicators and/or of door contacts and/or of sensors for physical variables of the drive unit.

6. A security system according to claim 5, characterised in that the status transducers (200) control a starter motor and/or actuating switches for lighting devices and/or the ignition and/or injection device.

7. A security system according to claim 6, characterised in that the status transducers (200) are separable only destructively from the elements controlled thereby.

8. A security system according to any one of claims 5 to 7, characterised in that the absolutely necessary functional unit (101) of the monitoring unit (100) is the central control unit of the vehicle.

9. A security system according to any one of the preceding claims, characterised in that the code signal of at least one of the status indicators (300) or status transducers (200) and/or the monitoring unit (100) may be altered by external influence.

10. A security system according to claim 9, characterised in that the external influence is a radio signal, and in that connected to the above-mentioned status indicator or status transducer is a radio receiver, which cannot be nondestructively separated therefrom and which causes the emission of an error code signal to the common information transmission channel in the case of functional impairment.

11. A security system according to any one of the preceding claims, characterised in that the common information transmission channel is an optical transmission channel.

## Revendications

1. Système de sécurité pour la protection d'un objet mobile, en particulier d'un véhicule, contre une utilisation ou un enlèvement non autorisé, l'objet présentant au moins une unité fonctionnelle (101) qui peut être commandée par un utilisateur et qui est obligatoire pour le fonctionnement de l'objet, et le système de sécurité présentant des détecteurs d'état (103, 300) pour la mesure de grandeurs physiques et une unité de surveillance (100) pour la surveillance des signaux de sortie des détecteurs d'état (300) et pour la commande de fonctions d'alarme et/ou de l'unité fonctionnelle (101),
**caractérisé** par le fait
que l'unité fonctionnelle (101) fait partie d'une unité de surveillance (100) et ne peut pas être séparée sans destruction de cette dernière,
que l'unité de surveillance (100) présente une unité de commande (104) commandant au moins l'unité fonctionnelle (101) et reliée par un canal commun de transmission d'informations (400) aux détecteurs d'état (300) pour la mesure de grandeurs physiques et/ou à des transducteurs d'état (200) pour la commande de grandeurs physiques,
que les détecteurs d'état (300) et les transducteurs d'état (200) émettent de façon continue ou sur commande, par le canal commun de transmission d'informations (400), des signaux codés identifiant le détecteur d'état (300) ou transducteur d'état,
que des informations sur la forme correcte des signaux codés d'au moins un nombre prédéterminé des détecteurs d'état (300) et transducteurs d'état (200) du système de sécurité sont mémorisées dans l'unité de commande (104) de l'unité de surveillance (100) et l'unité de commande (104) bloque la fonction de l'unité fonctionnelle (101) lorsque l'unité de commande ne reçoit pas sous forme correcte tout au moins les signaux codés du nombre prédéterminé de détecteurs d'état (300) et transducteurs d'état (200),
qu'au moins l'un des détecteurs d'état (300) ou transducteurs d'état (200) est relié au canal commun de transmission d'informations (400) en passant par une unité de commande supplémentaire (202, 302) dans laquelle sont également mémorisées des informations sur la forme correcte des signaux codés d'au moins un nombre supplémentaire prédéterminé des autres détecteurs d'état (300), transducteurs d'état (200) et unités de commande (104, 202, 302) et qui surveille ces signaux codés de façon continue ou sur commande et exécute une détection d'état ou transduction d'état prévue uniquement si les signaux codés du nombre supplémentaire prédéterminé de détecteurs d'état (300), transducteurs d'état (200) et unités fonctionnelles (101) sont reçus correctement en passant par le canal commun de transmission d'informations (400).

2. Système de sécurité suivant la revendication 1, **caractérisé** par le fait que le nombre des signaux codés surveillés dans une unité de commande prédéterminée et l'instant de la surveillance dépendent de l'état de fonctionnement de l'objet à protéger.

3. Système de sécurité suivant la revendication 1 ou 2, **caractérisé** par le fait qu'une unité de commande qui ne reçoit pas correctement tous les signaux codés du nombre prédéterminé associé de signaux codés transmet un signal d'erreur codé sur le canal commun de transmission d'informations et que le signal codé d'erreur peut être exploité dans les autres unités de commande et/ou détecteurs d'état et/ou transducteurs d'état.

4. Système de sécurité suivant l'une des revendications 1 à 3, **caractérisé** par le fait que l'unité de surveillance (100) contient des détecteurs d'état (103) et transducteurs d'état (102) qui ne peuvent pas en être séparés sans destruction.

5. Système de sécurité suivant l'une des revendications précédentes, dans lequel l'objet est un véhicule (1), **caractérisé** par le fait que les détecteurs d'état (300) et/ou les unités de commande de ces derniers constituent une partie, non séparable sans destruction, d'un contacteur de démarrage et/ou de détecteurs de mouvement et/ou de contacts de porte et/ou de capteurs de grandeurs physiques de l'unité de propulsion.

6. Système de sécurité suivant la revendication 5, **caractérisé** par le fait que les transducteurs d'état (200) commandent un moteur de démarreur et/ou interrupteur d'actionnement pour dispositifs d'éclairage et/ou le dispositif d'allumage et/ou d'injection.

7. Système de sécurité suivant la revendication 6, **caractérisé** par le fait que les transducteurs d'état (200) ne peuvent être séparés qu'avec destruction des éléments qu'ils commandent.

8. Système de sécurité suivant l'une des revendications 5 à 8, **caractérisé** par le fait que l'unité fonctionnelle (101), obligatoire, de l'unité de surveillance (100) est l'unité de commande centrale du véhicule.

9. Système de sécurité suivant l'une des revendications précédentes, **caractérisé** par le fait que le signal codé d'au moins l'un des détecteurs d'état (300) ou transducteurs d'état (200) et/ou de l'unité de surveillance (100) peut être modifié par intervention extérieure.

10. Système de sécurité suivant la revendication 9, **caractérisé** par le fait que l'intervention extérieure est constituée par un signal radio et qu'auxdits détecteurs d'état ou transducteurs d'état est relié, de manière à ne pas pouvoir en être séparé sans destruction, un récepteur radio qui, lorsqu'une fonction est entravée, provoque l'émission d'un signal codé d'erreur sur le canal commun de transmission d'informations.

11. Système de sécurité suivant l'une des revendications précédentes, **caractérisé** par le fait que le canal commun de transmission d'informations est un canal de transmission optique.
